# EUROPÄISCHE PATENTSCHRIFT

(11) **EP 3 740 086 B1**
(45) Veröffentlichungstag und Bekanntmachung des Hinweises auf die Patenterteilung: **02.03.2022**
(21) Anmeldenummer: 18702934.3
(22) Anmeldetag: 18.01.2018
(51) Int. Cl.: A23L 27/20, A23L 27/26

(54) **VERFAHREN ZUR HERSTELLUNG VON AROMASTOFFEN MIT VERBESSERTEM SENSORISCHEN PROFIL**
METHOD FOR PRODUCING AROMA SUBSTANCES WITH AN IMPROVED SENSORY PROFILE
PROCÉDÉ DE PRODUCTION DE SUBSTANCES AROMATIQUES PRÉSENTANT UN PROFIL SENSORIEL AMÉLIORÉ

(43) Veröffentlichungstag der Anmeldung: 25.11.2020
(73) Patentinhaber: Symrise AG, 37603 Holzminden Niedersachsen (DE)
(72) Erfinder: HEINE, Sebastian, 37671 Höxter (DE); KOCH, Jens, 37632 Eschershausen (DE); SABATER, Christopher, 37603 Holzminden (DE)
(74) Vertreter: Daniels, Stefanie Lisa
(86) Internationale Anmeldenummer: PCT/EP2018/051148
(87) Internationale Veröffentlichungsnummer: WO 2019/141358

(56) Entgegenhaltungen:
- EP-A1- 0 867 122
- US-A- 4 571 342

## Beschreibung

### GEBIET DER ERFINDUNG

Die Erfindung befindet sich auf dem Gebiet der Lebensmitteltechnologie und betrifft ein Verfahren zur Herstellung von Aromastoffzusammensetzungen mit verbesserten speziellen Aromaprofilen.

### STAND DER TECHNIK

Aromastoffzusammensetzungen werden in der Nahrungsmittelindustrie auf verschiedenste Art und Weise verwendet. Eine übliche Art von Nahrungsmittel-Aromastoffzusammensetzungen sind solche, die Nahrungsmitteln ein würzig-gekochtes, bratiges bis röstiges Aromaprofil verleihen. Solche Nahrungsmittel-Aromastoffzusammensetzungen können beispielsweise auf die Nahrungsmittel aufgesprüht oder in eine Lösung der Aromastoffe eingetaucht werden, oder die Nahrungsmittel-Aromastoffe können auf eine Vielzahl verschiedener Wege angewendet werden.

Zusammensetzungen, die den Eindruck spezieller Aromen im Rahmen einer Temperaturbehandlung verleihen, sind prinzipiell aus dem Stand der Technik bekannt.

Aus US 4,571,342 ist eine Zusammensetzung bekannt, die den Eindruck eines Grillaromas verleiht. Die beschriebene Aromastoff-Zusammensetzung wird durch ein Verfahren hergestellt, bei dem man eine Schicht aus Fett oder Öl in Gegenwart von Sauerstoff für einen geeigneten Zeitraum Temperaturen im Bereich von 150°C bis 475°C, bevorzugt im Bereich von 285 °C bis 360 °C ausgesetzt und das Fett oder Öl anschließend sammelt. Dieses Verfahren umfasst eine Dünnschichtvorrichtung mit kontinuierlichem Fluss, bei der Fett oder pflanzliches Öl eine Röhre hinunterfließt, und bei der sich bei einem konstanten Luftstrom durch das Zentrum der Röhre eine dünne Schicht des Fetts oder pflanzlichen Öls an der Innenseite der Röhre bildet. Außerdem ist das Verfahren oxidativ, da die Erhitzung des pflanzlichen Öls in Gegenwart einer erheblichen Menge Sauerstoff durchgeführt wird.

Eine Weiterentwicklung der oben beschriebenen Aromastoff-Zusammensetzung wird in US 4,820,538 offenbart. Es wird beschrieben, dass es zu einer ineffektiven Verwendung der Ausstattung sowie einer ungleichmäßigen Reaktion kommt, wenn man bei den US 4,571,342-Verfahren ein Scale-up vornimmt. Somit betrifft US 4,820,538 ein Verfahren zur Herstellung einer Aromastoff-Zusammensetzung, welches folgende Schritte umfasst:
(a) Heizen einer aromaproduzierenden Zusammensetzung, die im Wesentlichen aus einem Fett oder Öl besteht, das zur Herstellung eines gegrillten Holzkohlenaromas geeignet ist;
(b) Aussetzen einer dünnen Schicht dieses Fettes oder Öls in einem Dünnschichtwärmetauscher einer Temperatur von mindestens 316 °C in der Gegenwart von Sauerstoff für eine Zeitspanne von weniger als zwei Minuten, um eine exotherme Reaktion hervorzurufen, die eine Auslass-Produkttemperatur von mindestens 343 °C erzeugt, wobei die Zeitspanne, während der das Öl oder Fett in Gasphase vorliegt, den größten Prozentsatz der Reaktionszeit ausmacht, wobei das Aroma entwickelt wird, wenn das Produkt den Wärmetauscher verlässt; und
(c) schnelles Kühlen der rauchförmigen Reaktionsprodukte auf eine Temperatur innerhalb des Bereichs von 99 °C bis 110 °C und gleichzeitiges Entfernen eines kleinen Teils Dampfes, der teerartige und herbe Noten enthält, um ein verbessertes Aroma zu produzieren.

Das Dokument EP 0356799 B1 offenbart ein Verfahren zur Herstellung einer Geschmacksstoffzusammensetzung, bei welchem ein Fett oder Öl oder irgendeine Mischung zweier oder mehrerer Fette oder deren Öle in Form eines flüssigen Pools einer Temperatur von 300 °C bis 475 °C in Anwesenheit von Sauerstoff in einer Vorrichtung vom Chargentyp unterworfen wird, die mit Gaseinlass- und -auslassanschlüssen und Mitteln zum Sammeln der destillierten flüchtigen Inhaltsstoffe versehen ist. Zweckmäßig tritt Sauerstoff in den Gaseinlassanschluß ein, tritt aus dem Gasauslaßanschluss aus, wobei es die destillierten flüchtigen Inhaltstoffe mit sich führt, und tritt bevorzugt durch die Sammelmittel hindurch, bevor er in die Atmosphäre entweicht. Die Wiedergewinnung der bei der Reaktion destillierten flüchtigen Inhaltsstoffe kann mit jedem beliebigen wirksamen herkömmlichen Mittel erreicht werden, wie mit einer Kühlfalle, einem Kondensator oder einer Kühlwasserfalle.

Das Dokument EP 0867122 B1 offenbart ein Verfahren zur Herstellung von Aromastoff-Zusammensetzungen unter Verwendung von Reaktoren für schnelle Pyrolyse und hochstabilen pflanzlichen Ölen oder Fetten als Ausgangsmaterial. Somit betrifft dieses Dokument ein Verfahren zur Herstellung eines Aromastoffs, bei dem man:
(a) einen Spray oder zerstäubte Tropfen eines gesättigten oder teilweise gesättigten Pflanzenöls in einer Sauerstoff-armen Atmosphäre in einem System für schnelle Pyrolyse innerhalb von 1,0 Sekunden auf eine Temperatur von mindestens 480°C erhitzt;
(b) das Pflanzenöl zusammen mit den aus dem Pflanzenöl erzeugten Pyrolyse-Produkten für einen Zeitraum von weniger als einer Sekunde bei über 480°C belässt;
(c) die gebildeten Pyrolyse-Produkte innerhalb von 0,1 Sekunden schnell abschreckt;
(d) den flüssigen Extrakt abtrennt und sammelt.

Die Verfahren des Stands der Technik haben jedoch den Nachteil, dass sie die Anschaffung von speziellen und komplizierten Vorrichtungen oder Teilen von Vorrichtungen benötigen, was zu einem zusätzlichen technologischen Aufwand und demzufolge zu einer erheblichen Erhöhung der wirtschaftlichen Kosten des Prozesses führt. Im Übrigen sind keine Verfahren bekannt, die ausschließlich zu würziggekocht, bratigen bis röstigen Aromen führen bzw. diesen Geschmackseindruck hervorheben.

Darüber hinaus haben die unter Verwendung dieser Verfahren erhaltenen Produkte jedoch in der Regel ein begrenztes Aroma-Profil sowie ein begrenztes Ausmaß an Aroma-Konzentration. Insbesondere zeichnen sich die im Stand der Technik beschriebenen Verfahren dadurch aus, dass die Herstellung der Zusammensetzungen bei hohen Temperaturen in der Regel bei Temperaturen von mindesten 350 °C - durchgeführt wird. Bei solchen drastischen Bedingungen erfolgt die Pyrolyse-Reaktion auf eine unkontrollierte Art und Weise. Konsequenterweise bilden sich dabei eine Reihe von Stoffen und Nebenprodukten, die einerseits benzinartigen, teerartigen und herben Noten der gewonnenen Aromastoffzusammensetzung verleihen und andererseits gesundheitlich hinsichtlich auf die Verzehrbarkeit bedenklich sind. Typische Vertreter dieser unerwünschte Substanzen sind: 1-Decen, 1-Undecen, 5-Undecen, 2-Undecen und 1,3-Undecadien. Aus diesem Grund benötigen die Verfahren des Stands der Technik zusätzliche und aufwendige Purifikationsschritte, um diese unerwünschte Stoffe zu trennen oder zu beseitigen.

Es besteht daher im Gebiet der Lebensmitteltechnologie ein starkes Bedürfnis nach neuen und verschiedenen Aromastoffzusammensetzungen mit verbesserten würzig-gekocht, bratigen bis röstigen Aromaprofilen frei von den oben geschilderten Nachteilen, die entweder direkt oder in gemischter Form als Grillnahrungsmittel-Aromastoffe eingesetzt werden können, und deren Herstellung mit einer Standardanlage möglich ist, ohne das Einbauen spezieller und komplizierter Vorrichtungen zu benötigen.

Es besteht ebenso daher im Gebiet der Lebensmitteltechnologie ein starkes Bedürfnis nach neuen Herstellungsverfahren von Aromastoffzusammensetzungen mit würzig-bratigen Aromaprofilen, bei dem die Entstehung von 1-Decen, 1-Undecen, 5-Undecen, 2-Undecen und 1,3-Undecadien verhindert oder vermindert wird.

Die Aufgabe der vorliegenden Erfindung hat somit darin bestanden, ein Verfahren zur Herstellung einer Aromastoffzusammensetzungen mit neuartigen würzig-bratigen Aromaprofilen zur Verfügung zu stellen, die ein harmonisches und ausbalanciertes Aromaprofil, frei von oder mit reduzierten chemischen, benzinartigen, teerartigen und herben Aromanoten, aufweisen. Insbesondere sollen die Aromastoffzusammensetzungen von 1-Decen, 1-Undecen, 5-Undecen, 2-Undecen und 1,3-Undecadien frei sein oder einen reduzierten Gehalt an diesen Verbindungen aufweisen.

Eine zweite Aufgabe der vorliegenden Erfindung hat darin bestanden, ein Verfahren zur Herstellung von Aromastoffzusammensetzungen mit würzig-bratigen bis röstigen Aromaprofilen zur Verfügung zu stellen, welches die Bildung von Stoffen und Nebenprodukten, die für die Verleihung von benzinartigen, teerartigen und herben Noten zuständig und gesundheitlich bedenklich sind, vermindert oder unterdrückt.

### GEGENSTAND DER ERFINDUNG

Die Erfindung betrifft ein Verfahren zur Herstellung einer flüssigen Aromazusammensetzung mit verbessertem würzig-gekocht, bratigem bis röstigem sensorischen Profil, umfassend die folgenden Schritte:
(a) Bereitstellen einer ätherischen Ölkomponente sowie gegebenenfalls eines Trägerstoffs;
(b) Erhitzung der Ölkomponente auf Temperaturen von etwa 80 bis etwa 300 °C über einen Zeitraum von etwa 0,1 bis etwa 6 Sekunden;
(c) Abkühlen des resultierenden Produktes unter Erhalt der Aromazusammensetzung.

Überraschenderweise wurde gefunden, dass sich eine Kurzzeit-Temperaturbehandlung, insbesondere in einem Induktions- kontinuierlichen Reaktor in besonderer Weise eignet, das Aromaprofil ätherischer Öle im Allgemeinen und von solchen mit ausgeprägter Knoblauch und/oder Zwiebelnote im Besonderen, in Richtung der gewünschten Aromanoten zu verschieben.

### EINSATZSTOFFE

Geeignete Einsatzstoffe umfassen die Gruppe der ätherischen Öle, die vorzugsweise durch Wasserdampfdestillation aus Pflanzenmaterial, insbesondere Blättern und Blüten gewonnen werden. Chemisch betrachtet handelt es sich um Gemische verschiedener Terpene, Sesquiterpene und Aromaten, wie beispielsweise die Mono- und Sesquiterpene Ocimen, Myrcen, Linalool, Geraniol, Neral, Citronellal, Limonen, Terpinen, Phellandren, Menthol, Carvon, Menthon, Menthofuran, Cineol, Anethofuran, Geranylacetat, Linalylacetat, Farnesol, Farnesan, Bisabolol, Caryophyllen, Pinen, Camphen, Sabinol, Borneol, Campher, fenchon, Essigsäurebornylester, Isobornylacetat und Chmazulen oder Aromaten wie zum Beispiel Carveol, Carvacrol, Thymol, Apiol, Zimtaldehyd, Anethol, Dillapiol, Estragol und Coriandrin, oder im Fall von Zwiebel und Knoblauch um schwefelhaltige Komponenten wie Dipropy-Idisulfid, Dimethyldisulfid, Diallyldisulfid.

Die ätherischen Ölkomponenten zeichnen sich vorzugsweise dadurch aus, dass sie ein Lauch-, Zwiebel- und/oder Knoblaucharoma aufweisen. Besonders geeignet sind daher Pfefferöl, Zwiebelöl, Pilzöl, Limettenöl, Petersilienöl, Koriandersamenöl, Lauchöl, Estragonöl, Basilikumöl, Pimentöl, Muskatnussöl, Zwiebelöl, Karottensamenöl, Sellerieöl, Ingweröl, Rosmarinöl, Salbeiöl, Thymianöl, Cardamonöl, Knoblauchöl und Bärlauchöl sowie deren Gemische. Besonders bevorzugt sind Zwiebelöl und Knoblauchöl, sowie die folgenden Mischungen:
- Pfefferöl/Limettenöl/Petersilienöl
- Koriandersamenöl/Lauchöl;
- Estragonöl/Basilikumöl;
- Pimentöl/Muskatnussöl/Zwiebelöl;
- Knoblauchöl/Zwiebelöl/Lauchöl;
- Karottensamenöl/Sellerieöl/Petersilienöl/Lauchöl
wobei die Komponenten vorzugsweise in den Mischungen etwa gleichen Mengen vorliegen.

### TRÄGERSTOFFE

Üblicherweise werden die ätherischen Öle zusammen mit Trägerstoffen eingesetzt, bei denen es sich vorzugsweise um Fette, Öle oder deren Gemische handelt. Insbesondere kommen als Träger Palmöl, Kokosöl, Sojaöl, Erdnussöl, Olivenöl, Rapsöl, Sonnenblumenöl, Maisöl, Canolaöl, Leinöl, Distelöl, Rindertalg, Schweineschmalz sowie Butter in Betracht.

Üblicherweise setzt man die Ölkomponenten und die Trägerstoffe im Gewichtsverhältnis von etwa 1:99 bis etwa 50:50, vorzugsweise etwa 5:95 bis etwa 20:80 und insbesondere etwa 10:90 bis etwa 20:80 ein.

### TEMPERATURBEHANDLUNG

Das erfindungsgemäße Verfahren stellt vorzugsweise eine Kurzzeittemperaturbehandlung dar, bei dem man die Ölkomponenten oder deren Mischungen mit Trägerstoffen auf eine Temperatur von etwa 100 bis etwa 280 °C und insbesondere etwa 120 bis etwa 180 °C erhitzt. Unter Kurzzeitbehandlung ist dabei eine Verweilzeit im Reaktor von etwa 1 bis 5 Sekunden zu verstehen. Um derartig kurze Reaktionszeiten zu erhalten, ist es empfehlenswert, die Einsatzstoffe unter Druck durch den Reaktor zu befördern und hierzu einen Druck von etwa 0,5 bis 5 bar und insbesondere von etwa 1 bis 2 bar anzulegen. Auf diese Weise lässt sich das Verfahren batchweise, vorzugsweise aber kontinuierlich durchführen.

Als Wärmequellen kommen grundsätzlich alle konduktiven sowie konvektiven Ausführungsformen in Betracht. Als besonders geeignet hat sich erweisen, die Temperaturbehandlung in einem kontinuierlichen Reaktor durchzuführen, der beispielsweise aus Edelstahl gefertigt sein kann und insbesondere eine Edelstahlkapillare, vorzugsweise in Form einer Spirale darstellt.

In einer weiteren bevorzugten Ausführungsform der Erfindung wird der kontinuierliche Reaktor durch elektromagnetische Induktion aufgeheizt.

Das Verfahren des induktiven Erhitzens wird schon länger in der Industrie verwendet und ist für den Fachmann bestens bekannt. Die häufigsten Anwendungen sind Schmelzen, Härten, Sintern und die Wärmebehandlung von Legierungen. Aber auch Prozesse wie Kleben, Schrumpfen oder Verbinden von Bauteilen sind bekannte Anwendungen dieser Heiztechnik.

Das Prinzip der induktiven Erwärmung und die Auslegung von induktiven Erwärmungsvorrichtungen sind in der Fachliteratur beschrieben, beispielsweise in "Elektrotechnologie", Hrsg. H. Conrad, R. Krampitz, VEB Verlag Technik Berlin, 1983, 58-114; G. Benkowski, "Induktionserwärmung", Berlin Verlag Technik, 1990; R. E. Haimbaugh "Practical Induction Heat Treating", ASM International Materials Park, OH 44073-0002, Dec 2001; V. Rudnev, D. Loveless, R. Cook, M. Black "Handbook of Induction Heating", Marcel Dekker Inc., New York und Basel, 2003.

Das Dokument DE 10 2005 051637 beschreibt ein Reaktorsystem mit einem mikrostrukturierten Reaktor sowie ein Verfahren zur Durchführung einer chemischen Reaktion in einem solchen Reaktor. Dabei wird der Reaktor als solcher durch elektromagnetische Induktion aufgeheizt. Der Wärmeübergang in das Reaktionsmedium erfolgt über die aufgeheizten Reaktorwände.

Aus dem Zeitschriftenartikel "Induktives Heizen in der organischen Synthese durch Verwendung funktionalisierter magnetischer Nanopartikel in Mikroreaktoren" von S.Ceylan, C. Friese, Ch. Lammel, K. Mazac und A. Kirschning, Angew. Chem 2008 (129), SS. 9083-9086, Angew. Chem int. Ed. 2008 (47), SS. 8950-8953 ist bekannt, dass chemische Reaktionen durch Erwärmen eines Heizmediums mit Hilfe elektromagnetischer Induktion durchgeführt werden können.

Jedoch ist eine Aromastoffzusammensetzung mit den gesuchten Aromaprofilen, die mit Hilfe des induktiven Erhitzens hergestellt würde, aus dem Stand der Technik nicht bekannt.

### KÜHLUNG

Es hat sich ferner im Hinblick auf die Bildung unerwünschter Aromakomponenten als empfehlenswert erwiesen, die Kühlung der Reaktionsprodukte sehr rasch durchzuführen, vorzugsweise mit einer Geschwindigkeit von etwa 0,8 °C/Sekunde bis etwa 20 °C/Sekunde und vorzugsweise von etwa 5 °C/Sekunde bis etwa 10 °C/Sekunde durchzuführen.

In Summe bevorzugt ist ein Verfahren, bei dem man die Temperaturbehandlung in einem kontinuierlichen Reaktor bei einer Temperatur im Bereich von etwa 100 bis 280 °C und einem Druck von etwa 0,5 bis etwa 5 bar über einen Zeitraum von etwa 1 bis 5 Sekunden durchführt und die flüssigen Produkte dann mit einer Rate von etwa 5 bis etwa 10 °C/Sekunde abkühlt.

### BEISPIELE

### BEISPIEL 1

### Temperaturbehandeltes Zwiebelöl

Eine Mischung aus 10 Gew.-% Zwiebelöl und 90 Gew.-% Rapsöl wurde kontinuierlich in eine Vorlage gefördert und mit Hilfe einer Dosierpumpe mit einem Druck von 2 bar in einen Induktions- kontinuierlichen Reaktor (HG4400, Fa. Himmelwerk) gepumpt, der mit Hilfe eines Hochfrequenzgenerators auf 220 °C erhitzt wurde. Die Verweilzeit der Probe im Reaktor betrug etwa 5 Sekunden, dann wurde sie in eine Edelstahlkapillare gefördert und einer Rate von 8°C/Sekunde auf 20 °C abgekühlt. Das resultierende Produkt zeichnete sich gegenüber dem Ausgangsstoff durch eine deutlich höhere Röstnote sowie ein intensives und süßes Aroma nach geröstetem und sautiertem Knoblauch auf

Das Reaktionsprodukt wurde gaschromatographisch analysiert und wies die Hauptkomponenten gemäß nachfolgender **Tabelle 1** auf.

### BEISPIEL 2

### Temperaturbehandeltes Knoblauchöl

Eine Mischung aus 10 Gew.-% Knoblauchöl und 90 Gew.-% Rapsöl wurde kontinuierlich in eine Vorlage gefördert und mit Hilfe einer Dosierpumpe mit einem Druck von 2 bar in einen Induktions- kontinuierlichen Reaktor (HG4400, Fa. Himmelwerk) gepumpt, der mit Hilfe eines Hochfrequenzgenerators auf 220 °C erhitzt wurde. Die Verweilzeit der Probe im Reaktor betrug etwa 5 Sekunden, dann wurde sie in eine Edelstahlkapillare gefördert und einer Rate von 8°C/Sekunde auf 20 °C abgekühlt. Das resultierende Produkt zeichnete sich gegenüber dem Ausgangsstoff durch eine deutlich höhere Röstnote sowie ein intensives und süßes Aroma nach gerösteten und sautierten Zwiebeln auf

Das Reaktionsprodukt wurde gaschromatographisch analysiert und wies die Hauptkomponenten gemäß nachfolgender **Tabelle 1** auf.

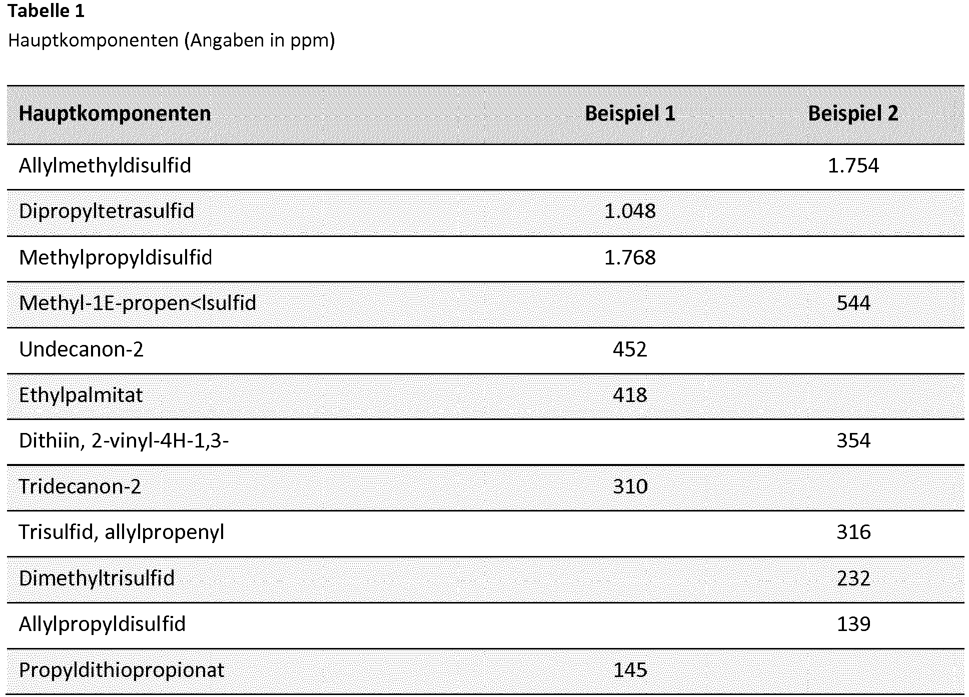

## Patentansprüche

1. Verfahren zur Herstellung einer flüssigen Aromazusammensetzung mit verbessertem würzig-gekocht, bratigem bis röstigem sensorischen Profil, umfassend die folgenden Schritte:
(a) Bereitstellen einer ätherischen Ölkomponente sowie gegebenenfalls eines Trägerstoffs;
(b) Erhitzung der Ölkomponente auf Temperaturen von etwa 80 bis etwa 300 °C über einen Zeitraum von etwa 0,1 bis etwa 6 Sekunden;
(c) Abkühlen des resultierenden Produktes unter Erhalt der Aromazusammensetzung.

2. Verfahren nach Anspruch 1, **dadurch gekennzeichnet, dass** man Ölkomponenten einsetzt, die ein Lauch-, Zwiebel- und/oder Knoblaucharoma aufweisen.

3. Verfahren nach den Ansprüchen 1 und/oder 2, **dadurch gekennzeichnet, dass** man Ölkomponenten einsetzt, die ausgewählt sind aus der Gruppe, die gebildet wird von Pfefferöl, Limettenöl, Zwiebelöl, Pilzöl, Petersilienöl, Koriandersamenöl, Lauchöl, Estragonöl, Basilikumöl, Pimentöl, Muskatnussöl, Zwiebelöl, Karottensamenöl, Sellerieöl, Ingweröl, Rosmarinöl, Salbeiöl, Thymianöl, Zimt-und Cardamonöl, Knoblauchöl und Bärlauchöl sowie deren Gemischen.

4. Verfahren nach mindestens einem der Ansprüche 1 bis 3, **dadurch gekennzeichnet, dass** man Trägerstoffe einsetzt, die ausgewählt sind aus der Gruppe, die gebildet wird von Palmöl, Kokosöl, Sojaöl, Erdnussöl, Olivenöl, Rapsöl, Sonnenblumenöl, Maisöl, Canolaöl, Leinöl, Distelöl, Rindertalg, Schweineschmalz sowie Butter.

5. Verfahren nach mindestens einem der Ansprüche 1 bis 4, **dadurch gekennzeichnet, dass** man die Ölkomponenten und die Trägerstoffe im Gewichtsverhältnis von etwa 1:99 bis etwa 50:50 einsetzt.

6. Verfahren nach mindestens einem der Ansprüche 1 bis 5, **dadurch gekennzeichnet, dass** man die Ölkomponenten oder deren Mischungen mit Trägerstoffen auf eine Temperatur von etwa 100 bis etwa 280 °C erhitzt.

7. Verfahren nach mindestens einem der Ansprüche 1 bis 6, **dadurch gekennzeichnet, dass** man die Ölkomponenten oder deren Mischungen mit Trägerstoffen über einen Zeitraum von etwa 1 bis etwa 5 Sekunden erhitzt.

8. Verfahren nach mindestens einem der Ansprüche 1 bis 7, **dadurch gekennzeichnet, dass** man die Temperaturbehandlung der Ölkomponenten oder deren Mischungen mit Trägerstoffen unter Druck durchführt.

9. Verfahren nach Anspruch 8, **dadurch gekennzeichnet, dass** man die Temperaturbehandlung bei einem Druck von etwa 0,5 bis 5 bar durchführt.

10. Verfahren nach mindestens einem der Ansprüche 1 bis 9, **dadurch gekennzeichnet, dass** man die Temperaturbehandlung kontinuierlich durchführt.

11. Verfahren nach mindestens einem der Ansprüche 1 bis 10, **dadurch gekennzeichnet, dass** man die Temperaturbehandlung in einem kontinuierlichen Reaktor durchführt.

12. Verfahren nach Anspruch 11, **dadurch gekennzeichnet, dass** man den kontinuierlichen Reaktor durch elektromagnetische Induktion aufheizt.

13. Verfahren nach mindestens einem der Ansprüche 1 bis 12, **dadurch gekennzeichnet, dass** man die Produkte nach der Temperaturbehandlung mit einer Rate von etwa 0,8 °C/Sekunde bis etwa 20 °C/Sekunde abkühlt.

14. Verfahren nach mindestens einem der Ansprüche 1 bis 13, **dadurch gekennzeichnet, dass** man die Produkte nach der Temperaturbehandlung mit einer Rate von etwa 5 °C/Sekunde bis etwa 10 °C/Sekunde abkühlt.

15. Verfahren nach mindestens einem der Ansprüche 1 bis 14, **dadurch gekennzeichnet, dass** man die Temperaturbehandlung in einem kontinuierlichen Reaktor bei einer Temperatur im Bereich von etwa 100 bis 280 °C und einem Druck von etwa 0,5 bis etwa 5 bar über einen Zeitraum von etwa 1 bis 5 Sekunden durchführt und die flüssigen Produkte dann mit einer Rate von etwa 5 bis etwa 10 °C/Sekunde abkühlt.

## Claims

1. A method for producing a liquid flavor composition with an improved spicy-cooked, fried to roasted sensory profile, comprising the following steps:
(a) provision of an essential oil component and optionally a carrier;
(b) heating the oil component to temperatures of about 80 to about 300 ° C for a period of about 0.1 to about 6 seconds;
(c) cooling the resulting product while maintaining the flavor composition.

2. The method according to claim 1, **characterized in that** oil components are used which have a leek, onion and / or garlic aroma.

3. The method according to claims 1 and/or 2, **characterized in that** oil components are used which are selected from the group of pepper oil, lime oil, onion oil, mushroom oil, parsley oil, coriander seed oil, leek oil, estragon oil, basil oil, allspice oil, nutmeg oil, onion oil, carrot seed oil, celery oil, ginger oil, rosemary oil, sage oil, thyme oil, cinnamon and cardamom oil, garlic oil and wild garlic oil and mixtures thereof.

4. The method according to at least one of claims 1 to 3, **characterized in that** carrier substances are used which are selected from the group of palm oil, coconut oil, soybean oil, peanut oil, olive oil, rapeseed oil, sunflower oil, corn oil, canola oil, linseed oil, safflower oil, beef tallow, lard and butter.

5. The method according to at least one of claims 1 to 4, **characterized in that** the oil components and the carrier substances are used in a weight ratio of about 1:99 to about 50:50.

6. The method according to at least one of claims 1 to 5, **characterized in that** the oil components or mixtures thereof with carriers are heated to a temperature of about 100 to about 280 ° C.

7. The method according to at least one of claims 1 to 6, **characterized in that** the oil components or mixtures thereof with carriers are heated for a period of about 1 to about 5 seconds.

8. The method according to at least one of claims 1 to 7, **characterized in that** the temperature treatment of the oil components or mixtures thereof with carriers is carried out under pressure.

9. The method according to claim 8, **characterized in that** the temperature treatment is carried out at a pressure of about 0.5 to 5 bar.

10. The method according to at least one of claims 1 to 9, **characterized in that** the temperature treatment is carried out continuously.

11. The method according to at least one of claims 1 to 10, **characterized in that** the temperature treatment is carried out in a continuous reactor.

12. The method according to claim 11, **characterized in that** the continuous reactor is heated by electromagnetic induction.

13. The method according to at least one of claims 1 to 12, **characterized in that** after the temperature treatment, the products are cooled at a rate of about 0.8 ° C / second to about 20 ° C / second.

14. The method according to at least one of claims 1 to 13, **characterized in that** the products are cooled after the temperature treatment at a rate of about 5 ° C / second to about 10 ° C / second.

15. The method according to at least one of claims 1 to 14, **characterized in that** the temperature treatment is conducted in a continuous reactor at a temperature in the range of about 100 to 280 ° C and a pressure of about 0.5 to about 5 bar for a period of about 1 to 5 seconds and the liquid products are then cooled at a rate of about 5 to about 10 ° C / second.

## Revendications

1. Procédé pour la préparation d'une composition aromatique liquide dotée d'un profil sensoriel épicé-cuit, rôti à grillé, amélioré, comprenant les étapes suivantes :
(a) mise à disposition d'un composant de type huile essentielle ainsi qu'éventuellement d'une matière de support ;
(b) chauffage du composant de type huile à des températures d'environ 80 à environ 300 °C sur une durée d'environ 0,1 à environ 6 secondes ;
(c) refroidissement du produit résultant avec obtention de la composition aromatique.

2. Procédé selon la revendication 1, **caractérisé en ce qu'**on utilise des composants de type huile qui présentent un arôme de poireau, d'oignon et/ou d'ail.

3. Procédé selon les revendications 1 et/ou 2, **caractérisé en ce qu'**on utilise des composants de type huile qui sont choisis dans le groupe qui est formé par l'huile de poivre, l'huile de limette, l'huile d'oignon, l'huile de champignon, l'huile de persil, l'huile de graines de coriandre, l'huile de poireau, l'huile d'estragon, l'huile de basilic, l'huile de piment, l'huile de noix de muscade, l'huile d'oignon, l'huile de graines de carotte, l'huile de céleri, l'huile de gingembre, l'huile de romarin, l'huile de sauge, l'huile de thym, l'huile de cannelle et l'huile de cardamome, l'huile d'ail et l'huile d'ail des ours ainsi que leurs mélanges.

4. Procédé selon au moins l'une des revendications 1 à 3, **caractérisé en ce qu'**on utilise des matières de support qui sont choisies dans le groupe formé par l'huile de palme, l'huile de coco, l'huile de soja, l'huile d'arachide, l'huile d'olive, l'huile de colza, l'huile de tournesol, l'huile de maïs, l'huile de canola, l'huile de lin, l'huile de chardon, le suif de bœuf, le saindoux ainsi que le beurre.

5. Procédé selon au moins l'une des revendications 1 à 4, **caractérisé en ce qu'**on utilise les composants de type huile et les matières de support en un rapport en poids d'environ 1 : 99 à environ 50 : 50.

6. Procédé selon au moins l'une des revendications 1 à 5, **caractérisé en ce qu'**on chauffe les composants de type huile ou leurs mélanges avec des matières de support à une température d'environ 100 à environ 280 °C.

7. Procédé selon au moins l'une des revendications 1 à 6, **caractérisé en ce qu'**on chauffe les composants de type huile ou leurs mélanges avec des matières de support pendant une durée d'environ 1 à environ 5 secondes.

8. Procédé selon au moins l'une des revendications 1 à 7, **caractérisé en ce qu'**on réalise sous pression le traitement en température des composants de type huile ou leurs mélanges avec des matières de support.

9. Procédé selon la revendication 8, **caractérisé en ce qu'**on réalise le traitement en température à une pression d'environ 0,5 à 5 bars.

10. Procédé selon au moins l'une des revendications 1 à 9, **caractérisé en ce qu'**on réalise le traitement en température de manière continue.

11. Procédé selon l'une quelconque des revendications 1 à 10, **caractérisé en ce qu'**on réalise le traitement en température dans un réacteur en continu.

12. Procédé selon la revendication 11, **caractérisé en ce qu'**on chauffe le réacteur en continu par induction électromagnétique.

13. Procédé selon l'une quelconque des revendications 1 à 12, **caractérisé en ce qu'**on refroidit les produits après le traitement en température à une vitesse d'environ 0,8 °C/seconde à environ 20 °C/seconde.

14. Procédé selon l'une quelconque des revendications 1 à 13, **caractérisé en ce qu'**on refroidit les produits après le traitement en température à une vitesse d'environ 5 °C/seconde à environ 10 °C/seconde.

15. Procédé selon l'une quelconque des revendications 1 à 14, **caractérisé en ce qu'**on réalise le traitement en température dans un réacteur en continu à une température dans la plage d'environ 100 à environ 280 °C et une pression d'environ 0,5 à environ 5 bars pendant une durée d'environ 1 à 5 secondes et on refroidit ensuite les produits liquides à une vitesse d'environ 5 à environ 10 °C/seconde.
